# EUROPÄISCHE PATENTANMELDUNG

(11) **EP 3 731 372 A1**
(43) Veröffentlichungstag der Anmeldung: **28.10.2020**
(21) Anmeldenummer: 19170791.8
(22) Anmeldetag: 24.04.2019
(51) Int. Cl.: H02K 1/06, H02K 1/02

(54) **MAGNETBLECHSTAPEL UND VERFAHREN ZUR FERTIGUNG EINES MAGNETBLECHSTAPELS**

(71) Anmelder: Siemens Aktiengesellschaft, 80333 München (DE)
(72) Erfinder: Schuh, Carsten, 85598 Baldham (DE); Vollmer, Rolf, 36129 Gersfeld (DE)

(57) **Zusammenfassung**

Der Magnetblechstapel weist eine erste Abfolge (40, 240, 340, 440, 540) mit zumindest erste in Richtung einer Stapelrichtung einander folgenden magnetischen Schichten (50, 250, 350, 450, 550) und eine zweite Abfolge (20, 220, 320, 420, 520) mit zweiten, von der ersten Schicht abweichenden magnetischen, vorzugsweise unmagnetischen, in Stapelrichtung einander folgenden Schichten (30, 230, 330, 430, 530) auf, wobei entlang eines Abschnitts in Stapelrichtung (S) die erste Abfolge (40, 240, 340, 440, 540) zumindest formschlüssig mit der zweiten Abfolge (20, 220, 320, 420, 520) verbunden ist.

## Beschreibung

Die Erfindung betrifft einen Magnetblechstapel und ein Verfahren zur Fertigung eines Magnetblechstapels sowie eine elektrische Maschine.

Es ist bekannt, bei elektrischen Maschinen Statoren und/oder Rotoren mittels Magnetblechstapeln zu bilden.

Ein neuartiges Verfahren zur Herstellung von Magnetblechen für solche Magnetblechstapel nutzt den Schablonendruck. Bei diesem Verfahren wird ausgehend von Metallpulver zunächst eine Druckpaste erzeugt, welche dann mittels einer Schablonendrucktechnik zu einem Grünkörper in Gestalt einer Dickschicht verarbeitet wird. Anschließend wird dieser Grünkörper durch thermische Behandlung, d.h. mittels Entbinderung und Sinterung, in ein metallisches strukturiertes Blech in Gestalt eines Magnetblechs überführt. Mittels solcher Magnetbleche kann ein Magnetblechstapel zur Bildung von Statoren und/oder Rotoren für elektrische Maschinen gebildet werden.

Es ist bekannt, auch mehrkomponentige Magnetbleche auf solche Weise herzustellen. Dazu werden die verschiedenen Komponenten eines Magnetblechs sequenziell hintereinander auf eine Trägerplatte gedruckt und danach gemeinsam thermisch behandelt. Jedoch sind nicht sämtliche Komponenten von solchen mehrkomponentigen Magnetblechen einer pulverbasierten Druck- und Sinterfertigung zugänglich oder koprozessierbar.

Es ist daher Aufgabe der Erfindung, einen verbesserten Magnetblechstapel anzugeben, welcher insbesondere einfach und zuverlässig herstellbar ist. Ferner ist es Aufgabe der Erfindung, ein Verfahren zur Fertigung eines Magnetblechstapels anzugeben, welches insbesondere eine hohe Designfreiheit bietet und eine Fertigung auch bei inkompatiblen Materialien oder stark unterschiedlichen Sinterschwindungen von einzelnen Komponenten eines mehrkomponentigen Magnetblechstapels erlaubt. Zudem ist es Aufgabe der Erfindung, eine verbesserte elektrische Maschine anzugeben.

Diese Aufgabe der Erfindung wird mit einem Magnetblechstapel mit den in Anspruch 1 angegebenen Merkmalen sowie mit einem Verfahren zur Fertigung eines Magnetblechstapels mit den in Anspruch 12 angegebenen Merkmalen gelöst. Bevorzugte Weiterbildungen der Erfindung sind in den zugehörigen Unteransprüchen, der nachfolgenden Beschreibung und der Zeichnung angegeben.

Der erfindungsgemäße Magnetblechstapel weist eine erste Abfolge mit zumindest ersten in Richtung einer Stapelrichtung einander folgenden magnetischen Schichten und einer zweiten Abfolge mit zweiten, von der ersten Schicht abweichend magnetischen, vorzugsweise unmagnetischen, in Stapelrichtung einander folgenden Schichten, bei welchem entlang eines Abschnitts in Stapelrichtung die erste Abfolge zumindest formschlüssig mit der zweiten Abfolge verbunden ist. Auf diese Weise können erste Abfolge und zweite Abfolge oder erste Schichten und zweite Schichten mit Materialien gebildet sein, welche nur schwer oder kaum koprozessierbar, insbesondere schwer kosinterbar, sind. Besonders bei chemischer Inkomptabilität oder bei stark unterschiedlichen Schwindungen kann die Verbindung mittels Formschlusses eine zuverlässige Verbindung von erster und zweiter Abfolge gewährleisten. Vorteilhaft lässt sich ein erfindungsgemäßer Magnetblechstapel auch dann einfach und günstig fertigen, wenn einzelne Materialien des erfindungsgemäßen Magnetblechstapels nicht in einer kostengünstig herstellbaren und sinterfähigen Pulverform vorliegen.

In einer bevorzugten Weiterbildung des erfindungsgemäßen Magnetblechstapels sind die erste Abfolge und/oder die ersten Schichten und/oder die zweite Abfolge und/oder die zweiten Schichten Siebdruckteile oder Schablonendruckteile. Insbesondere lassen sich in einer bevorzugten Weiterbildung der Erfindung erste Abfolge und zweite Abfolge separat voneinander fertigen.

In einer bevorzugten Weiterbildung der Erfindung sind zweite Abfolge und/oder zweite Schichten Stanzteile und/oder Schneidteile, insbesondere Laserschneidteile. In dieser Weiterbildung der Erfindung können zweite Abfolge und/oder zweite Schichten als Stanzteile und/oder Schneidteile vorliegen, so dass hinsichtlich der zweiten Abfolge und/oder zweiten Schichten der erfindungsgemäße Magnetblechstapel nicht notwendigerweise auf ein bestimmtes Fertigungsverfahren oder eine bestimmte Materialklasse festgelegt ist.

Bei dem Magnetblechstapel gemäß der Erfindung greift die erste Abfolge vorteilhaft in die zweite Abfolge quer zur Stapelrichtung ein. Infolge eines Eingriffes quer zur Stapelrichtung in die zweite Abfolge durch die erste Abfolge sind erste Abfolge und zweite Abfolge gegenüber relativen Verschiebungen von erster Abfolge und zweiter Abfolge zueinander entlang der Stapelrichtung geschützt, d.h. festgelegt. Auf diese Weise sind erste und zweite Abfolge besonders einfach miteinander formschlüssig verbunden.

Besonders geeignet strecken sich bei dem erfindungsgemäßen Magnetblechstapel Schichten oder die Schichten der ersten Schichten der ersten Abfolge in die zweite Abfolge, insbesondere in oder zwischen zweite Schichten der zweiten Abfolge hinein. So können etwa erste und zweite Schichten von erster und zweiter Abfolge miteinander verzahnt sein, so dass sich jeweils eine Schicht der ersten Schichten zwischen zwei Schichten der zweiten Schichten hineinstreckt.

Vorzugsweise überlappen bei dem erfindungsgemäßen Magnetblechstapel mehrere, insbesondere sämtliche bis auf eine oder sämtliche, ersten Schichten mit den zweiten Schichten. Es versteht sich, dass im Rahmen der vorliegenden Erfindung der Begriff "Überlappen" jeweils ein Überlappen betrachtet in Richtung der Stapelrichtung meint. Auf diese Weise sind mit überlappenden Schichten erste und zweite Abfolge gegenüber Relativverschiebungen in Stapelrichtung festgelegt.

Zweckmäßig ragen bei dem erfindungsgemäßen Magnetblechstapel mehrere, insbesondere sämtliche bis auf eine oder sämtliche, ersten Schichten, insbesondere sich verjüngend, in je eine zweite Schicht ein. Mit einer sich verjüngenden Einragung von ersten Schichten in die jeweils zweiten Schichten greifen die ersten Schichten in der Art von Keilen oder Stiften in die zweite Schicht ein. Auf diese Weise sind die erste und die zweite Abfolge besonders stabil gegeneinander in Stapelrichtung formschlüssig festgelegt.

Geeigneter Weise treten bei dem erfindungsgemäßen Magnetblechstapel mehrere, insbesondere sämtliche bis auf eine oder sämtliche, ersten Schichten bereichsweise an die Stelle je einer zweiten Schicht. D.h. die jeweils erste Schicht ragt zumindest bereichsweise in denjenigen Raum ein, den eine andere zweite Schicht an anderen, senkrecht zur Stapelrichtung verschobenen, Bereichen in der zweiten Abfolge einnimmt. Auf diese Weise können erste Schichten in die zweite Abfolge einragen, in dem die ersten Schichten jeweils eine der zweiten Schichten bereichsweise in der zweiten Abfolge verdrängen.

Geeigneter Weise sind bei dem erfindungsgemäßen Magnetblechstapel erste Abfolge und zweite Abfolge stoffschlüssig aneinander angebunden und/oder aneinandergeklebt und/oder geschweißt. Mittels Klebens oder Schweißens können erste und zweite Abfolge nicht allein formschlüssig gegeneinander festgelegt werden, sondern erste und zweite Abfolge können darüber hinaus auch in sämtliche anderen Richtungen gegenüber relativen Kraftbeaufschlagungen zueinander festgelegt sein.

Geeigneter Weise treten bei dem erfindungsgemäßen Magnetblechstapel mehrere erste Schichten an die Stelle eines Bereichs der zweiten Schicht der zweiten Abfolge.

Besonders zweckmäßig sind bei dem erfindungsgemäßen Magnetblechstapel mehrere wie vorstehend beschriebene Magnetblechstapel in Stapelrichtung einander folgend oder direkt aufeinander folgend vorhanden und in Stapelrichtung zusammengefügt. Vorzugsweise sind die einzelnen Magnetblechstapel in Stapelrichtung zueinander kraftbeaufschlagt, so dass allein aufgrund der Kraftbeaufschlagung der Magnetblechstapel robust und stabil gefügt ist.

Bei dem erfindungsgemäßen Verfahren zur Fertigung eines Magnetblechstapels wie zuvor beschrieben werden zunächst die erste Abfolge und die zweite Abfolge gefertigt und nachfolgend erste und zweite Abfolge einander in Eingriff nehmend zusammengefügt.

Alternativ oder zusätzlich und ebenfalls bevorzugt werden bei dem erfindungsgemäßen Verfahren zur Fertigung eines Magnetblechstapels erste Schichten und zweite Schichten in Stapelrichtung einander folgend oder abwechselnd oder zeitgleich gestapelt. Auch infolge der magnetblechweisen Stapelung lässt sich der erfindungsgemäße Magnetblechstapel herstellen.

Bei dem erfindungsgemäßen Verfahren werden erste Abfolgen und/oder die ersten Schichten mittels Siebdrucks und/oder Schablonendrucks gefertigt. Zusätzlich können auch zweite Schichten der zweiten Abfolge mittels Siebdrucks und/oder Schablonendrucks gefertigt werden.

Die erfindungsgemäße elektrische Maschine ist ein Motor und/oder Generator und weist einen erfindungsgemäßen Magnetblechstapel wie vorhergehend beschrieben, insbesondere hergestellt nach einem erfindungsgemäßen Verfahren wie vorhergehend beschrieben, auf. Zweckmäßig ist ein Stator und/oder ein Rotor jeweils mit dem erfindungsgemäßen Magnetblechstapel gebildet.

Nachfolgend wird die Erfindung anhand eines in der Zeichnung dargestellten Ausführungsbeispiels näher erläutert. Es zeigen:
- Figur 1: ein erstes Ausführungsbeispiel eines erfindungsgemäßen Magnetblechstapels schematisch im Querschnitt,
- Figur 2: ein weiteres Ausführungsbeispiel eines erfindungsgemäßen Magnetblechstapels schematisch im Querschnitt,
- Figur 3: ein weiteres Ausführungsbeispiel eines erfindungsgemäßen Magnetfeldstapels schematisch im Querschnitt,
- Figur 4: ein weiteres Ausführungsbeispiel eines erfindungsgemäßen Magnetfeldstapels schematisch im Querschnitt,
- Figur 5: ein weiteres Ausführungsbeispiel eines erfindungsgemäßen Magnetfeldstapels schematisch im Querschnitt,
- Figur 6: den erfindungsgemäßen Magnetblechstapel gemäß Figur 1 schematisch in einer Draufsicht, sowie
- Figur 7: eine erfindungsgemäße elektrische Maschine mit einem erfindungsgemäßen Magnetblechstapel gem. Fig. 1

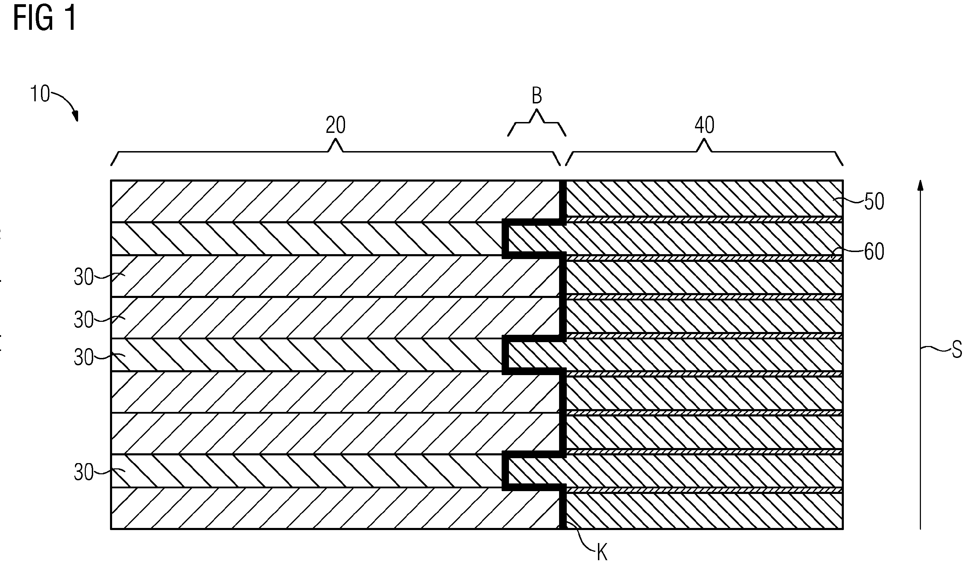

Der in Figur 1 dargestellte erfindungsgemäße Magnetblechstapel 10 weist eine Tragstruktur 20 aus nichtmagnetischen Blechen 30 sowie eine Funktionsstruktur 40 mit magnetischen Blechen 50 auf. Tragstruktur 20 und Funktionsstruktur 40 sind jeweils mit in einer Stapelrichtung S einander folgenden Blechen 30, 50 gebildet. Die einander folgenden magnetischen Bleche 50 der Funktionsstruktur 40 können beispielsweise wie in Fig. 1 dargestellt mit jeweils flächig zwischen den magnetischen Blechen 50 befindlichen Isolierschichten 60 aufeinandergestapelt sein. Im dargestellten Ausführungsbeispiel weisen die Isolierschichten 60 eine um mindestens eine Größenordnung, d.h. eine mindestens einen Faktor 10, geringere Dicke in Stapelrichtung S auf als die magnetischen Bleche 50.

Es ragt in dem in Figur 1 dargestellten Ausführungsbeispiel jedes dritte magnetische Blech 50 der Funktionsstruktur 40 in Richtung quer, d.h. senkrecht, zur Stapelrichtung S in einem Überlappungsbereich B in die Tragstruktur 20 ein. Dabei tritt in der Tragstruktur 20 das jeweils in die Tragstruktur 20 einragende magnetische Blech 50 der Funktionsstruktur 40 an die Stelle des jeweiligen nichtmagnetischen Blechs 30 der Tragstruktur 20. D.h. das magnetische Blech 50 der Funktionsstruktur 40 ragt in dem Überlappungsbereich B derart in die Tragstruktur 20 ein, dass jeweils zwischen zwei einragenden magnetischen Blechen 50 der Funktionsstruktur 40 zwei nichtmagnetische Bleche 30 der Tragstruktur 20 befindlich sind. Funktionsstruktur 40 und Tragstruktur 20 sind miteinander formschlüssig infolge des Einragens der magnetischen Bleche 50 der Funktionsstruktur 40 verzahnt und somit gegenüber relativen Verschiebungen entlang der Stapelrichtung S festgelegt. Zusätzlich sind Funktionsstruktur 40 und Tragstruktur 20 gegeneinander in anderen, d.h. in zur Stapelrichtung S senkrechten, Richtungen festgelegt, in dem Funktionsstruktur 40 und Tragstruktur 20 miteinander mittels einer Klebeverbindung K verklebt sind.

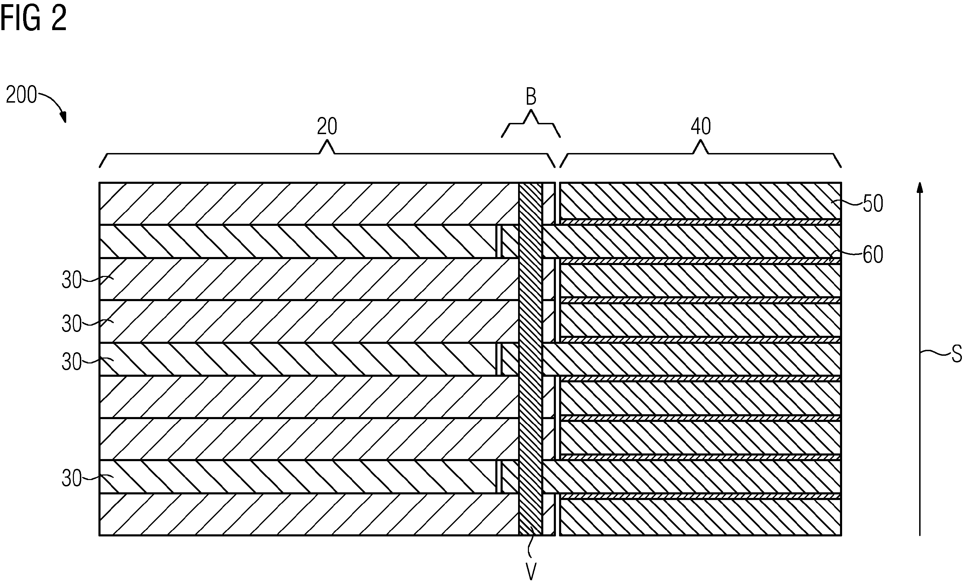

Grundsätzlich können Funktionsstruktur 40 und Tragstruktur 20 auch miteinander mittels einer Schweißverbindung V verschweißt sein, wie es bei dem Magnetblechstapel 200 in Figur 2 dargestellt ist. Im Übrigen entsprechen Funktionsstruktur 40 und Tragstruktur 20 des Magnetblechstapels 200 der Figur 2 der Funktionsstruktur 40 und Tragstruktur 20 in Figur 1.

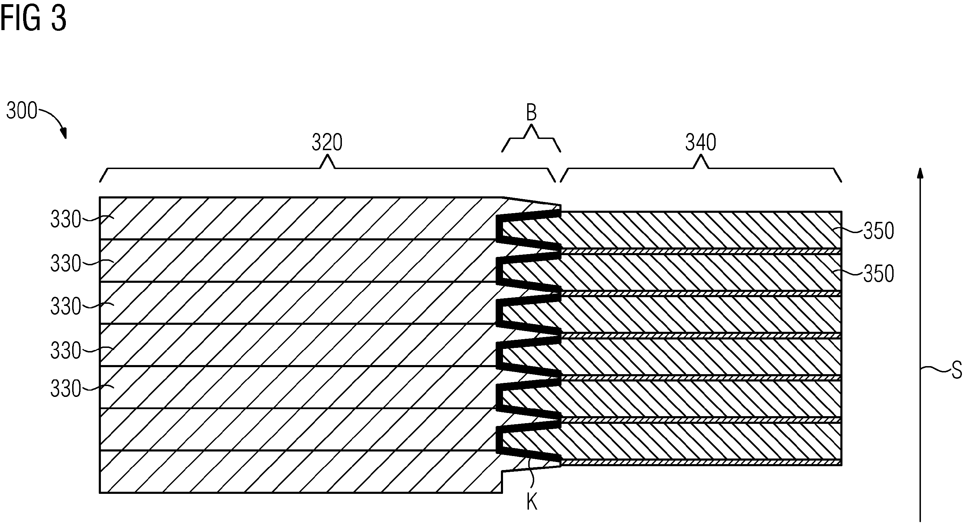

Im in Figur 3 dargestellten Ausführungsbeispiel eines Magnetblechstapels 300 sind Funktionsstruktur 340 und Tragstruktur 320 ebenfalls miteinander in Folge des Eingriffs der Funktionsstruktur 340 in die Tragstruktur 320 relativ zueinander gegenüber Verschiebungen in Richtung der Stapelrichtung S festgelegt.

Allerdings sind im Unterschied zu den vorhergehend beschriebenen Ausführungsbeispielen von Magnetblechstapeln 10, 200 Funktionsstruktur 340 und Tragstruktur 320 des Magnetblechstapels 300 derart miteinander verzahnt, dass jeweils jedes der Bleche 350 der Funktionsstruktur 340 jeweils zwischen zwei Bleche 330 der Tragstruktur 320 einragt. Der in Figur 3 dargestellte Magnetblechstapel 300 kann also in Folge von jeweils wechselseitiger Anordnung je eines Blechs 350 der Funktionsstruktur 340 und eines Blechs 330 der Tragstruktur 320 im Wechsel in Stapelrichtung S gebildet werden. Dabei ragen die Bleche 350 der Funktionsstruktur 340 und die Bleche 330 der Tragstruktur 320 derart in einem Überlappungsbereich B in einander ein, dass der jeweils in die Funktionsstruktur 340 einragende Teil der Bleche 330 der Tragstruktur 320 einerseits und der jeweils in die Tragstruktur 320 einragende Teil der Bleche 350 der Funktionsstruktur 340 andererseits sich jeweils derart keilförmig verjüngen, dass die Bleche 330 der Tragstruktur 320 umso kleinere Abmessungen in Richtung der Stapelrichtung S aufweisen, je weiter sie in die Funktionsstruktur 340 einragen und umgekehrt die Bleche 350 der Funktionsstruktur 340 umso geringere Abmessungen in Stapelrichtung S aufweisen als sie in die Tragstruktur 320 einragen.

Auch im in Figur 3 gezeigten Ausführungsbeispiel können die Bleche 350 der Funktionsstruktur 340 und die Bleche 330 der Tragstruktur 320 miteinander mittels einer Klebung für sich festgelegt sein.

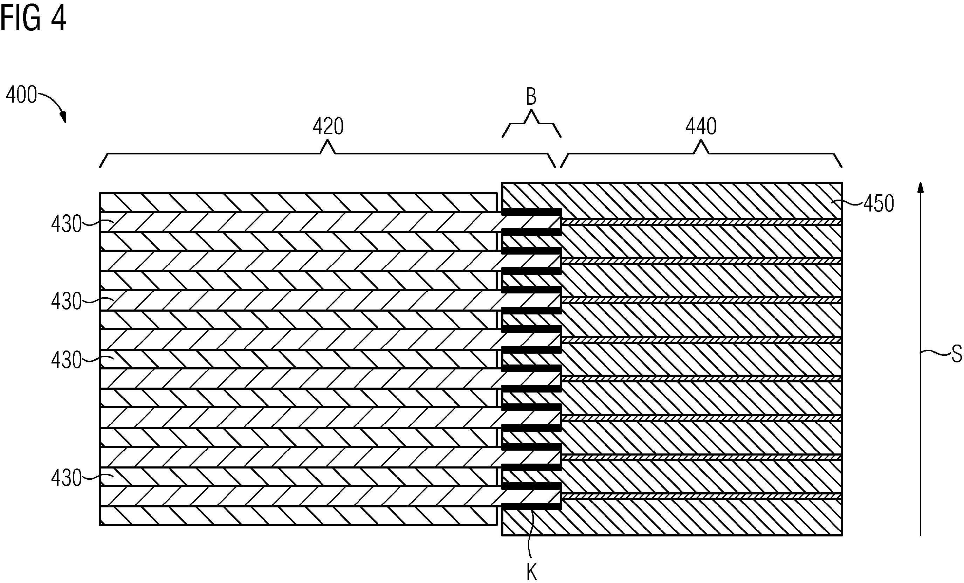

Wie in Figur 4 anhand eines weiteren erfindungsgemäßen Magnetblechstapels 400 gezeigt muss im Gegensatz zum in Figur 1 gezeigten Magnetblechstapel 10 die Anzahl an Blechen 450 der Funktionsstruktur 440 nicht mit der Anzahl an Blechen 430 der Tragstruktur 420 übereinstimmen. Insbesondere können sich, entlang Richtungen senkrecht zur Stapelrichtung S betrachtet jeweils Bleche 450 der Funktionsstruktur 440 sprunghaft in ihren Abmessungen in Richtung der Stapelrichtung S verringern, so dass je ein Blech 450 der Funktionsstruktur 440 mit einem Blech 430 der Tragstruktur 420 in Anlage ist. Dabei können im Überlappungsbereich B an den Abschnitten der magnetischen Bleche 450 der Funktionsstruktur 440 mit den verringerten Abmessungen weitere Bleche der Tragstruktur 420 anliegen, welche je das Blech 450 der Funktionsstruktur 440 in Eingriff nehmen.

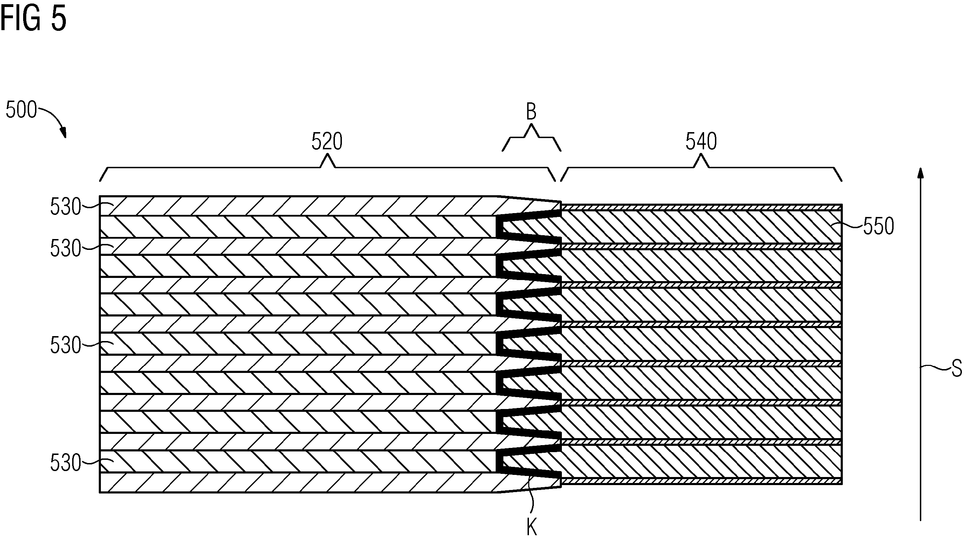

Zusätzlich können - wie anhand eines Magnetblechstapels 500 in Fig. 5 dargestellt - die in die Tragstruktur 520 einragenden Abschnitte der Bleche 550 der Funktionsstruktur 540 sich zusätzlich verjüngen, je weiter sie sich in die Tragstruktur 520 hineinstrecken. Dabei können Funktionsstruktur 540 und Tragstruktur 520 miteinander verklebt sein.

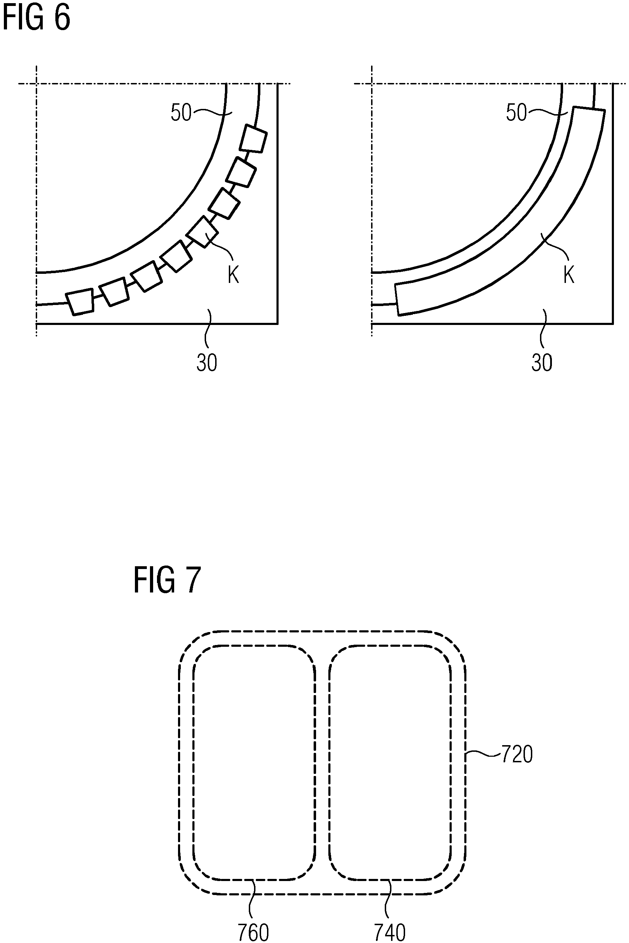

In der Draufsicht gemäß Figur 6 ist dargestellt, wie eine Klebung K von Tragstruktur 20 und Funktionsstruktur 40 entlang von sich senkrecht zur Stapelrichtung S erstreckenden Abschnitten kontinuierlich verlaufen kann, wie in Figur 6 b) dargestellt, oder aber in entlang von sich senkrecht zur Stapelrichtung S erstreckenden diskreten und miteinander nicht verbundenen Abschnitten verlaufen kann, wie in Figur 6 a) dargestellt.

Die in Figur 1 bis 6 dargestellten erfindungsgemäßen Magnetblechstapel 10, 200, 300, 400, 500 können einerseits jeweils separat als Tragstruktur 20, 220, 320, 420, 520 und als Funktionsstruktur 40, 240, 340, 440, 540 mittels Siebdruckens und nachfolgenden Entbinderns und/oder Sinterns gefertigt werden, wonach Funktionsstruktur 40, 240, 340, 440, 540 und Tragstruktur 20, 220, 320, 420, 520 nachfolgend zum erfindungsgemäßen Magnetblechstapel 10, 200, 300, 400, 500 zusammengesetzt werden können, etwa wie dargestellt mittels Schweißens und Klebens. Alternativ können die Bleche 50, 250, 350, 450, 550, 30, 230, 330, 430, 530 von Tragstruktur 20, 220, 320, 420, 520 und Funktionsstruktur 40, 240, 340, 440, 540 jeweils separat gefertigt sein und nachfolgend im Wechsel aneinander gestapelt werden.

Die in Figur 7 dargestellte erfindungsgemäße elektrische Maschine 720 ist ein Elektromotor und umfasst einen Stator 740 und einen Rotor 760. Sowohl der Stator 740 als auch der Rotor 760 sind jeweils mit einem erfindungsgemäßen Magnetblechstapel 10, wie er in Fig. 1 dargestellt ist, gebildet. In weiteren, nicht eigens dargestellten Ausführungsbeispielen ist anstelle des Magnetblechstapels 10 jeweils ein erfindungsgemäßer Magnetblechstapel 200 oder 300 oder 400 oder 500 vorhanden. In einem weiteren, nicht eigens dargestellten Ausführungsbeispiel, welches im Übrigen dem zuvor beschriebenen Ausführungsbeispiel entspricht, ist die elektrische Maschine 720 ein Stromgenerator.

## Patentansprüche

1. Magnetblechstapel mit einer ersten Abfolge (40, 240, 340, 440, 540) mit zumindest ersten in Richtung einer Stapelrichtung einander folgenden magnetischen Schichten (50, 250, 350, 450, 550) und einer zweiten Abfolge (20, 220, 320, 420, 520) mit zweiten, von der ersten Schicht abweichenden magnetischen, vorzugsweise unmagnetischen, in Stapelrichtung einander folgenden Schichten (30, 230, 330, 430, 530), bei welchem entlang eines Abschnitts in Stapelrichtung (S) die erste Abfolge (40, 240, 340, 440, 540) zumindest formschlüssig mit der zweiten Abfolge (20, 220, 320, 420, 520) verbunden ist.

2. Magnetblechstapel nach Anspruch 1, bei welchem die erste Abfolge (40, 240, 340, 440, 540) und/oder die ersten Schichten (50, 250, 350, 450, 550) und/oder die zweite Abfolge (20, 220, 320, 420, 520) und/oder die zweiten Schichten (30, 230, 330, 430, 530) Siebdruckteile und/oder Schablonendruckteile sind.

3. Magnetblechstapel nach einem der vorhergehenden Ansprüche, bei welchem zweite Abfolge (20, 220, 320, 420, 520) und/oder zweite Schichten (30, 230, 330, 430, 530) Stanzteile und/oder Schneideteile, insbesondere Laserschneideteile, sind.

4. Magnetblechstapel nach einem der vorhergehenden Ansprüche, bei welchem entlang des Abschnitts die erste Abfolge (40, 240, 340, 440, 540) in die zweite Abfolge (20, 220, 320, 420, 520) quer zur Stapelrichtung (S) eingreift.

5. Magnetblechstapel nach einem der vorhergehenden Ansprüche, bei welchem sich Schichten (50, 250, 350, 450, 550) oder die Schichten (50, 250, 350, 450, 550) der ersten Abfolge (40, 240, 340, 440, 540) in die zweite Abfolge (20, 220, 320, 420, 520) insbesondere in oder zwischen zweite Schichten (30, 230, 330, 430, 530) der zweiten Abfolge (20, 220, 320, 420, 520) hineinstrecken.

6. Magnetblechstapel nach einem der vorhergehenden Ansprüche, bei welchem vorzugsweise mehrere, insbesondere sämtliche bis auf eine oder sämtliche, ersten Schichten (50, 250, 350, 450, 550) mit den zweiten Schichten (30, 230, 330, 430, 530) überlappen.

7. Magnetblechstapel nach einem der vorhergehenden Ansprüche, bei welchem vorzugsweise mehrere, insbesondere sämtliche bis auf eine oder sämtliche, ersten Schichten (350, 450, 550), insbesondere sich verjüngend, in je eine zweite Schicht (330, 430, 530) einragen.

8. Magnetblechstapel nach einem der vorhergehenden Ansprüche, bei welchem vorzugsweise mehrere, insbesondere sämtliche bis auf eine oder sämtliche ersten Schichten (50, 250, 350, 450, 550) bereichsweise an die Stelle je einer zweiten Schicht (30, 230, 330, 430, 530) treten.

9. Magnetblechstapel nach einem der vorhergehenden Ansprüche, bei welchem erste Abfolge (40, 240, 340, 440, 540) und zweite Abfolge (20, 220, 320, 420, 520) aneinander geklebt und/oder geschweißt sind.

10. Magnetblechstapel nach einem der vorhergehenden Ansprüche, bei welchem vorzugsweise mehrere, insbesondere sämtliche bis auf eine oder sämtliche, ersten Schichten (50, 450) an die Stelle eines Bereichs je einer zweiten Schicht (30, 430) der zweiten Abfolge (20, 420) treten.

11. Magnetblechstapel nach einem der vorhergehenden Ansprüche, welcher mit mehreren in Stapelrichtung (S) aneinander folgenden Magnetblechstapel (10, 200, 300, 400, 500) nach einem der folgenden Ansprüche gebildet ist.

12. Verfahren zur Fertigung eines Magnetblechstapels nach einem der vorhergehenden Ansprüche, bei welchem zunächst die erste Abfolge (40, 240, 340, 440, 540) und die zweite Abfolge (20, 220, 320, 420, 520) gefertigt werden und nachfolgend die erste (40, 240, 340, 440, 540) und die zweite Abfolge (20, 220, 320, 420, 520) einander Eingriff nehmend zusammengefügt werden.

13. Verfahren zur Fertigung eines Magnetblechstapels nach einem der vorhergehenden Ansprüche, bei welchem die ersten Schichten (50, 250, 350, 450, 550) und die zweiten Schichten (30, 230, 330, 430, 530) in Stapelrichtung (S) wechselseitig oder einander folgend gestapelt werden.

14. Verfahren nach einem der vorhergehenden Ansprüche, bei welchem die erste Abfolge (40, 240, 340, 440, 540) und/oder die ersten Schichten (50, 250, 350, 450, 550) mittels Siebdrucks und/oder Schablonendrucks gefertigt werden.

15. Elektrische Maschine mit einem Magnetblechstapel (10, 200, 300, 400, 500) nach einem der vorhergehenden Ansprüche.
